# EUROPEAN PATENT APPLICATION

(11) **EP 3 421 565 A1**
(43) Date of publication of application: **02.01.2019**
(21) Application number: 17756031.5
(22) Date of filing: 19.01.2017
(51) Int. Cl.: C09J 7/02, B32B 27/00, B32B 27/18, B32B 27/40, C08G 18/40, C08J 5/18, C09J 11/08, C09J 157/02, C09J 175/14, C09J 193/04, G02F 1/1333, G09F 9/00, C08G 18/62

(54) **OPTICALLY CLEAR ADHESIVE SHEET, METHOD FOR PRODUCING OPTICALLY CLEAR ADHESIVE SHEET, LAMINATE, AND DISPLAY DEVICE HAVING TOUCH PANEL ATTACHED THERETO**

(30) Priority: 26.02.2016 JP 2016036096
(71) Applicant: Bando Chemical Industries, Ltd., Kobe-shi, Hyogo 650-0047 (JP)
(72) Inventor: NAKANE, Soichiro, Kobe-shi Hyogo 650-0047 (JP); HOSOKAWA, Yuki, Kobe-shi Hyogo 650-0047 (JP); ONISHI, Jun, Kobe-shi Hyogo 650-0047 (JP)
(74) Representative: Müller-Boré & Partner Patentanwälte PartG mbB
(86) International application number: PCT/JP2017/001701
(87) International publication number: WO 2017/145589

(57) **Abstract**

The present invention provides an optically clear adhesive sheet with excellent transparency using a thermosetting polyurethane composition that has excellent flexibility and is capable of giving a thick film. The optically clear adhesive sheet of the present invention contains: a cured product of a thermosetting polyurethane composition, the thermosetting polyurethane composition containing a polyol component, a polyisocyanate component, and a tackifier, the thermosetting polyurethane composition having a tackifier content of 5 to 21 wt%.

## Description

### TECHNICAL FIELD

The present invention relates to optically clear adhesive sheets, methods for producing an optically clear adhesive sheet, laminates, and display devices with a touchscreen.

### BACKGROUND ART

Optically clear adhesive (OCA) sheets are transparent adhesive sheets used to bond optical members to each other. A recent rapid increase in demand for touchscreens in the fields of smartphones, tablet PCs, handheld game consoles, and automotive navigation systems is accompanied by an increase in demand for OCA sheets used to bond a touchscreen to another optical member. A typical display device with a touchscreen has a structure in which optical members including a display panel (e.g., liquid crystal panel), a transparent member (touchscreen main unit) having on its outer surface a transparent conductive film formed of a material such as indium tin oxide (ITO), and a cover panel that protects the transparent conductive film are stacked, with OCA sheets used to bond these optical members to each other. In between the display panel and the touchscreen main unit, however, is typically an air layer called an air gap and no OCA sheet because there is a gap larger than gaps between the other optical members due to the edge of a bezel, which is the housing of the display panel.

Known OCA sheets include those formed of a silicone-based resin composition, for example. OCA sheets containing a silicone-based resin, however, have a low adhesive strength and thus allow air to enter between the optical members. This may decrease, for example, the visibility of the display screen.

Known OCA sheets also include those formed of a resin composition with an acryloyl group introduced therein (for example, Patent Literatures 1 to 3). In OCA sheets containing acrylic resin, acrylic acid remaining in the acrylic resin or acid components generated through hydrolysis may unfortunately corrode metals used in optical members. Photo-curable acrylic resins tend to turn yellow and thus it is difficult to retain their colorlessness and transparency for a long period of time. In addition, in the case where the acrylic resin composition is a photo-curable (including UV-curable) resin composition, a thick OCA sheet may be difficult to obtain because free radicals in the acrylic resin, which are necessary in the curing reaction, may be consumed in the outer layer part under light, leaving the bottom part uncured.

Patent Literature 4, meanwhile, discloses production of an OCA sheet using a two-component thermosetting polyurethane resin composition. The two-component thermosetting polyurethane resin composition contains a highly hydrophobic hydrogenated dimer diol for better whitening resistance.

### CITATION LIST

### - Patent Literature

Patent Literature 1: WO 2013/088889
Patent Literature 2: WO 2013/115250
Patent Literature 3: JP 2015-40240 A
Patent Literature 4: JP 2013-18856 A

### SUMMARY OF INVENTION

### - Technical Problem

An air gap, which is an air layer, formed between optical members causes interfacial reflection because there are differences in refractive index between the air layer and the optical members. Such interfacial reflection lowers visibility of the display panel. This disadvantage has led to a demand for a thick OCA sheet suited to bonding of a display panel and a touchscreen main unit. Also, an OCA sheet used to bond a display panel and a touchscreen main unit is required to conform to an uneven surface on which the thick bezel is present. Accordingly, an OCA sheet has been desired which exhibits excellent flexibility (capability to conform to uneven surfaces) and can be made thick. An OCA sheet is also required to have physical properties that do not change under the influence of the usage environment.

In studies to solve these problems, the inventors have focused on a solvent-free thermosetting polyurethane composition as a material of an OCA sheet that exhibits excellent flexibility and can be made thick. They have then found that OCA sheets formed of a thermosetting polyurethane composition can still be improved in terms of stable transparency. The demand for higher transparency is particularly strong as to thick OCA sheets because transparency changes are likely to be noticeable in such sheets.

Patent Literature 4 discloses that an optically clear adhesive sheet has satisfactory transparency as well as other satisfactory characteristics such as flexibility only when a hydrogenated dimer diol and hydroxy-terminated hydrogenated polybutadiene are used at a specific mass ratio (paragraphs 0014 to 0016). Yet, there is a demand for a method for obtaining an optically clear adhesive sheet having high transparency using a thermosetting polyurethane composition containing components different from those in Patent Literature 4.

The present invention has been made in view of the above current state of the art, and aims to provide an optically clear adhesive sheet with excellent transparency using a thermosetting polyurethane composition that has excellent flexibility and is capable of giving a thick film.

### - Solution to Problem

The present inventors have made studies to increase the transparency of an optically clear adhesive sheet formed of a thermosetting polyurethane composition. The studies have found that a tackifier (adhesion-imparting resin), when added in a given amount, can not only enhance the adhesive strength, but also increase the miscibility between the polyol component, which is hydrophobic, and the polyisocyanate component, which is hydrophilic. This reduces generation of air bubbles and whitening, leading to favorable transparency. Thereby, the inventors have completed the present invention.

The optically clear adhesive sheet of the present invention contains a cured product of a thermosetting polyurethane composition, the thermosetting polyurethane composition containing a polyol component, a polyisocyanate component, and a tackifier, the thermosetting polyurethane composition having a tackifier content of 5 to 21 wt%.

The optically clear adhesive sheet preferably has a haze of 5% or lower which is a value calculated with the thickness of the sheet set to 1000 µm. The polyol component preferably includes a hydrophobic polyol. The polyisocyanate component preferably includes a hydrophilic polyisocyanate. The tackifier preferably includes at least one of a hydrogenated petroleum resin and an alicyclic saturated hydrocarbon resin.

Another aspect of the present invention relates to a method for producing the optically clear adhesive sheet of the present invention, the method including the steps of: preparing the thermosetting polyurethane composition by mixing the polyol component, the polyisocyanate component, and the tackifier with stirring; and curing the thermosetting polyurethane composition.

Yet another aspect of the present invention relates to a laminate including: the optically clear adhesive sheet of the present invention; a first release liner covering one surface of the optically clear adhesive sheet; and a second release liner covering the other surface of the optically clear adhesive sheet.

Yet another aspect of the present invention relates to a display device with a touchscreen, including: the optically clear adhesive sheet of the present invention; a display panel; and a touchscreen.

### - Advantageous Effects of Invention

The optically clear adhesive sheet of the present invention can achieve high degree of transparency while retaining the superior properties of a thermosetting polyurethane composition having excellent flexibility and being capable of giving a thick film.

The method for producing an optically clear adhesive sheet according to the present invention enables suitable production of the above optically clear adhesive sheet. The laminate of the present invention can improve the handleability of the optically clear adhesive sheet of the present invention. The display device with a touchscreen according to the present invention can improve the visibility of the display screen.

### BRIEF DESCRIPTION OF DRAWINGS

Fig. 1 shows a schematic cross-sectional view of an exemplary display device with a touchscreen which includes the optically clear adhesive sheets of the present invention.
Fig. 2 shows a schematic view for describing an exemplary molding machine used in production of the optically clear adhesive sheet of the present invention.
Fig. 3 shows a schematic cross-sectional view of an optically clear adhesive sheet with release liners of Example 1.
Fig. 4 shows schematic views for describing the method for evaluating the adhesive strength of the optically clear adhesive sheets of examples and comparative examples.

### DESCRIPTION OF EMBODIMENTS

The optically clear adhesive sheet of the present invention contains a cured product of a thermosetting polyurethane composition, the thermosetting polyurethane composition containing a polyol component, a polyisocyanate component, and a tackifier, the thermosetting polyurethane composition having a tackifier content of 5 to 21 wt%. The "optically clear adhesive sheet" as used herein has the same meaning as an "optically clear adhesive film".

The optically clear adhesive sheet of the present invention contains a cured product of a thermosetting polyurethane composition, and the thermosetting polyurethane composition contains a polyol component and a polyisocyanate component. The cured product of a thermosetting polyurethane composition is obtained by reacting the polyol component and the polyisocyanate component and has a structure represented by the following formula (A).

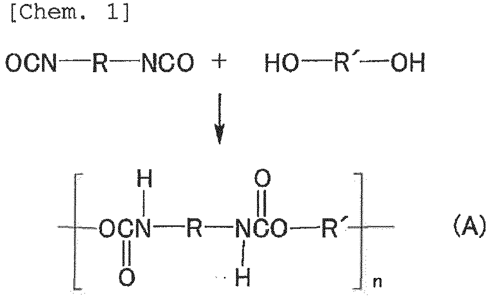

In the formula (A), R represents a non-NCO-group moiety of a polyisocyanate component, R' represents a non-OH-group moiety of a polyol component, and n represents the number of repeating units.

The cured product of a thermosetting polyurethane composition is preferably not an acrylic-modified one, and preferably contains no moiety derived from, for example, an acrylic ester or a methacrylic ester in the main chain. If the thermosetting polyurethane composition contains an acryloyl group, the miscibility between the components in the composition may be insufficient. An acrylic-modified cured product of a thermosetting polyurethane composition is hydrophobic and is thus likely to cause moisture condensation at high temperature and high humidity. The moisture condensation may cause defects such as whitening and foaming to deteriorate the optical characteristics. With a non-acrylic-modified cured product of a thermosetting polyurethane composition, deterioration of the optical characteristics due to defects such as whitening and foaming at high temperature and high humidity can be prevented.

Both the polyol component and the polyisocyanate component can be components that are liquids at normal temperature (23°C), so that a cured product of a thermosetting polyurethane composition can be obtained without a solvent. Other components such as a tackifier can be added to the olefin-based polyol component or the polyisocyanate component, and are preferably added to the polyol component. Production of an optically clear adhesive sheet using a cured product of a thermosetting polyurethane composition, which requires no removal of a solvent, enables formation of a thick sheet with an even surface. The optically clear adhesive sheet of the present invention, when used to bond a display panel and a transparent member (touchscreen) having on its outer surface a transparent conductive film, can therefore conform to an uneven surface on which the bezel is present. Also, the optically clear adhesive sheet of the present invention can keep its optical characteristics even when made thick, and thus can sufficiently prevent transparency decrease (haze increase), coloring, and foaming (generation of air bubbles at the interface with the adherend).

Containing a cured product of a thermosetting polyurethane composition and flexible, the optically clear adhesive sheet of the present invention under tensile stress is elongated well and very unlikely to be torn. The optically clear adhesive sheet can therefore be peeled off without adhesive residue. Since the optically clear adhesive sheet of the present invention can be made thick while being flexible, the optically clear adhesive sheet is excellent in shock resistance and can be used to bond a transparent member having a transparent conductive film on its outer surface to a cover panel. In the case of using an additional member, the optically clear adhesive sheet can also be used to bond the display panel or the transparent member having a transparent conductive film on its outer surface to the additional member. The optically clear adhesive sheet of the present invention, containing a cured product of a thermosetting polyurethane composition, has a high dielectric constant and can give a higher capacitance than conventional optically clear adhesive sheets formed of an acrylic resin composition. The optically clear adhesive sheet of the present invention is therefore suitable for bonding of a capacitive touchscreen.

### [Polyol component]

Examples of the polyol component include, but are not particularly limited to, polyolefin polyols, polyether polyols, polyester polyols, polycarbonate polyols, and polycaprolactone polyols. These may be used alone or in combination with each other.

The polyol component is preferably a hydrophobic polyol. The term "hydrophobic" polyol herein means that the non-hydroxy-group moiety of the polyol (i.e., R' in the formula (A)) has a solubility parameter (SP value), calculated by the Fedors method, of lower than 9.0 MPa^{1/2}. How to calculate an SP value by the Fedors method is described in, for example, R. F. Fedors: Polym. Eng. Sci., 14[2], 147-154 (1974) and the paper entitled "Study on Solubility Parameter of Paint Additives" included in "Research on Coatings, Vol. 152 (October 2010)" published by Kansai Paint Co., Ltd.

Examples of the hydrophobic polyol include polyolefin polyols, polyether polyols, polyester polyols, polycarbonate polyols, and polycaprolactone polyols, with polyolefin polyols preferred. A polyolefin polyol is one having an olefin skeleton, meaning that its main chain includes a polyolefin or a derivative thereof. Hereinafter, the polyolefin polyol used for the polyol component is also referred to as an "olefin-based polyol component". Examples of the olefin-based polyol component include polybutadiene-based polyols such as 1,2-polybutadiene polyol, 1,4-polybutadiene polyol, 1,2-polychloroprene polyol, and 1,4-polychloroprene polyol, polyisoprene-based polyols, and saturated compounds obtained by adding hydrogen or halogen atoms to the double bonds of these polyols, for example. The olefin-based polyol component may be a polyol obtained by copolymerizing a polybutadiene-based polyol, for example, with an olefin compound (e.g., styrene, ethylene, vinyl acetate, or acrylic ester) or a hydrogenated compound thereof. The olefin-based polyol component may have a linear or branched structure. These compounds for the olefin-based polyol component may be used alone or in combination with each other.

Known examples of the olefin-based polyol component include a polyolefin polyol obtained by hydrogenating a hydroxy group-terminated polyisoprene ("EPOL®" available from Idemitsu Kosan Co., Ltd., number average molecular weight: 2500), both-end hydroxy group-terminated hydrogenated polybutadiene ("GI-1000" available from Nippon Soda Co., Ltd., number average molecular weight: 1500), and polyhydroxy polyolefin oligomer ("POLYTAIL®" available from Mitsubishi Chemical Corporation).

Examples of the polyether polyols include polyoxyalkylene glycols (e.g., polyethylene glycol, polypropylene glycol, polyoxypropylene triol, polyoxypropylene tetraol, polyoxytetramethylene glycol, polyoxytetramethylene triol, copolymers thereof), derivatives obtained by introducing a side chain or a branched structure to any of these polyoxyalkylene glycols, modified products thereof, and mixtures thereof.

Examples of the polyester polyols include products obtained by dehydration condensation of a dicarboxylic acid and a glycol component.

Examples of the dicarboxylic acid include aromatic dicarboxylic acids (e.g., terephthalic acid, isophthalic acid, 2,6-naphthalenedicarboxylic acid), oxalic acid, malonic acid, succinic acid, glutaric acid, adipic acid, azelaic acid, and sebacic acid.

Examples of the glycol component include aliphatic glycols (e.g., ethylene glycol, 1,4-butanediol, diethylene glycol, neopentyl glycol, 3-methyl-1,5-pentanediol, 1,5-pentanediol, 1,9-nonanediol, triethylene glycol); alicyclic glycols (e.g., 1,4-cyclohexanedimethanol); aromatic diols (e.g., p-xylenediol); and polyoxyalkylene glycols (e.g., polyethylene glycol, polypropylene glycol, polyoxytetramethylene glycol).

Polyester polyols formed of any of dicarboxylic acids and glycol components mentioned above have a linear molecular structure, but may be a polyester having a branched molecular structure obtained using a trivalent or higher valent ester-forming component. The dicarboxylic acid and the glycol component are reacted with a mole ratio of 1.1 to 1.3 at 150°C to 300°C.

Examples of the polycarbonate polyols include a reaction product of a dialkyl carbonate and a diol.

Examples of the dialkyl carbonate include dialkyl carbonates such as dimethyl carbonate and diethyl carbonate; diaryl carbonates such as diphenyl carbonate; and alkylene carbonates such as ethylene carbonate. These may be used alone or in combination with each other.

Example of the diol include 1,4-butanediol, diethylene glycol, 1,5-pentanediol, 1,6-hexanediol, 1,7-heptanediol, 1,8-octanediol, 2-methyl-1,8-octanediol, 1,9-nonanediol, 1,10-dodecanediol, 2-ethyl-1,6-hexanediol, 3-methyl-1,5-pentanediol, 2,4-dimethyl-1,5-pentanediol, neopentyl glycol, 1,3-cyclohexanediol, 1,4-cyclohexanediol, 1,4-cyclohexanedimethanol, and 2,2'-bis(4-hydroxycyclohexyl)-propane. These may be used alone or in combination with each other. The diol is preferably a C4-C9 alicyclic or alicyclic diol. For example, 1,4-butanediol, diethylene glycol, 1,5-pentanediol, 1,6-hexanediol, 3-methyl-1,5-pentanediol, 2,4-dimethyl-l,5-pentanediol, 1,4-cyclohexanedimethanol, 1,7-heptanediol, 1,8-octanediol, 2-methyl-1,8-octanediol, and 1,9-nonanediol are preferably used alone or in combination with each other. The diol is also preferably a copolycarbonate diol of 1,6-hexanediol and 3-methyl-1,5-pentanediol or a copolycarbonate diol of 1,6-hexanediol and 1,5-pentanediol.

Examples of the polycarbonate polyols include polycarbonate glycol, polycarbonate triol, polycarbonate tetraol, derivatives obtained by introducing a side chain or a branched structure to any of these, modified products thereof, and mixtures thereof.

Examples of the polycaprolactone polyols include polycaprolactone glycol, polycaprolactone triol, polycaprolactone tetraol, derivatives obtained by introducing a side chain or a branched structure to any of these, modified products thereof, and mixtures thereof.

The polyol component preferably has a number average molecular weight of 300 or more and 5000 or less. If the polyol component has a number average molecular weight of less than 300, the polyol component and the polyisocyanate component may react with each other very fast and the resulting cured product of a thermosetting polyurethane composition may be difficult to mold into a sheet with an even surface or the cured product of a thermosetting polyurethane composition may be less flexible and fragile. If the polyol component has a number average molecular weight of more than 5000, problems may arise such as that the polyol component may have a very high viscosity to cause difficulty in molding the cured product of a thermosetting polyurethane composition into a sheet with an even surface and that the cured product of a thermosetting polyurethane composition may crystallize to make the product opaque. The polyol component more preferably has a number average molecular weight of 500 or more and 3000 or less.

### [Polyisocyanate component]

The polyisocyanate component may be any polyisocyanate such as a known polyisocyanate, but is preferably a hydrophilic polyisocyanate. The term "hydrophilic" polyisocyanate herein means that the non-isocyanate-group moiety of the polyisocyanate (i.e., R in the formula (A)) has a solubility parameter (SP value), calculated by the Fedors method, of 9.0 MPa^{1/2} or higher. Examples of the hydrophilic polyisocyanate include a reaction product of a polyisocyanate and a hydrophilic polyol, with a reaction product of an aliphatic modified isocyanate and a hydrophilic polyol particularly preferred.

The hydrophilic polyisocyanate preferably has an ethylene oxide unit, and is particularly preferably a modified polyisocyanate obtained by reacting an acyclic aliphatic and/or alicyclic polyisocyanate containing an isocyanate group with an ether compound having an ethylene oxide unit. The modified polyisocyanate derived from an acyclic aliphatic and/or alicyclic polyisocyanate can reduce the chances of coloring or discoloration of the optically clear adhesive sheet and enables the optically clear adhesive sheet to exhibit long-lasting transparency with higher reliability. Also, being modified with an ether compound having an ethylene oxide unit, the polyisocyanate component can reduce whitening owing to its hydrophilic moiety (ethylene oxide unit) and can exhibit miscibility with low-polarity components such as a polyol component, a tackifier, and a plasticizer owing to its hydrophobic moiety (the other units).

The acyclic aliphatic and/or alicyclic polyisocyanate refers to one or more of the following: aliphatic diisocyanates, alicyclic diisocyanates, and polyisocyanates synthesized from starting materials of acyclic aliphatic and/or alicyclic diisocyanates.

Examples of the acyclic aliphatic polyisocyanate include hexamethylene diisocyanate (HDI), tetramethylene diisocyanate, 2-methyl-pentane-1,5-diisocyanate, 3-methylpentane-1,5-diisocyanate, lysine diisocyanate, trioxyethylene diisocyanate, and modified products thereof. These may be used alone or in combination with each other. Examples of the alicyclic polyisocyanate include isophorone diisocyanate, cyclohexyl diisocyanate, 4,4'-dicyclohexylmethane diisocyanate, norbornane diisocyanate, hydrogenated tolylene diisocyanate, hydrogenated xylene diisocyanate, hydrogenated tetramethyl xylene diisocyanate, and modified products thereof. These may be used alone or in combination with each other. Preferred are hexamethylene diisocyanate, isophorone diisocyanate, and modified products thereof, with hexamethylene diisocyanate and modified products thereof being particularly preferred. Examples of the modified products of hexamethylene diisocyanate include isocyanurate-modified, allophanate-modified, and/or urethane-modified products of hexamethylene diisocyanate.

Examples of the ether compound having an ethylene oxide unit include alcohol-, phenol-, or amine-ethylene oxide adducts. In order to improve the hydrophilicity, ether compounds having three or more ethylene oxide units per molecule are preferred. If having less than three ethylene oxide units per molecule, the ether compound may not be able to improve the hydrophilicity sufficiently.

Examples of the alcohol include monohydric alcohols, dihydric alcohols (e.g., ethylene glycol, diethylene glycol, propylene glycol, dipropylene glycol, 1,4-butanediol, 1,6-hexanediol, 1,3-butylenediol, neopentyl glycol), and trihydric alcohols (e.g., glycerol, trimethylol propane). These may be used alone or in combination with each other.

Examples of the phenol include hydroquinone, bisphenols (e.g., bisphenol A, bisphenol F), and phenolformaldehyde condensates with a low condensation degree (novolac resin and resol prepolymers). These may be used alone or in combination with each other.

The number of isocyanate groups per molecule of the hydrophilic polyisocyanate is preferably 2.0 or more on average. If the number of isocyanate groups is less than 2.0 on average, the thermosetting polyurethane composition may not be sufficiently cured due to a decrease in the crosslinking density.

The thermosetting polyurethane composition preferably has an α ratio (the number of moles of OH groups derived from polyol component/the number of moles of NCO groups derived from polyisocyanate component) of 1 or higher. An α ratio of lower than 1 suggests that the amount of the polyisocyanate component is excessive for the amount of the polyol component and thus the cured product of a thermosetting polyurethane composition is rigid, which makes it difficult to achieve the flexibility required for the optically clear adhesive sheet. With a low flexibility, an optically clear adhesive sheet cannot conform to a rough, uneven bonding surface of the adherend, especially an optical member such as a touchscreen. Also, the adhesive strength required for the optically clear adhesive sheet would not be achieved. The α ratio more preferably satisfies the inequality 1.3 < α < 2.0. An optically clear adhesive sheet with an α ratio satisfying the inequality 1.3 < α < 2.0 can exhibit favorable adhesive strength. If the α ratio is 2.0 or higher, the thermosetting polyurethane composition may not be sufficiently cured.

### [Tackifier]

The thermosetting polyurethane composition further contains a tackifier (adhesion-imparting agent). A tackifier is an additive that is added to enhance the adhesive strength, and is typically an amorphous oligomer having a molecular weight of several hundreds to several thousands which is a thermoplastic resin in a liquid or solid state at normal temperature. A thermosetting polyurethane composition containing a tackifier can enhance the adhesive strength of an optically clear adhesive sheet containing a cured product of the thermosetting polyurethane composition.

Non-limiting examples of the tackifier include petroleum resin-based tackifiers, hydrocarbon resin-based tackifiers, rosin-based tackifiers, and terpene-based tackifiers. These may be used alone or in combination with each other.

The tackifier is preferably a petroleum resin-based tackifier because it has excellent miscibility with a component such as the olefin-based polyol component. An especially preferred petroleum resin-based tackifier is a hydrogenated petroleum resin obtained by hydrogenating a copolymer of dicyclopentadiene and an aromatic compound. Dicyclopentadiene is obtainable from a C5 fraction. Examples of the aromatic compound include vinyl aromatic compounds such as styrene, α-methylstyrene, and vinyl toluene. The ratio of dicyclopentadiene to a vinyl aromatic compound is not particularly limited, but the ratio by weight of dicyclopentadiene to a vinyl aromatic compound (dicyclopentadiene:vinyl aromatic compound) is preferably 70:30 to 20:80, more preferably 60:40 to 40:60. The hydrogenated petroleum resin has a softening point of preferably 90°C to 160°C, a vinyl aromatic compound unit content of preferably 35 mass% or less, a bromine value of preferably 0 to 30 g/100 g, and a number average molecular weight of preferably 500 to 1100. Known examples of the hydrogenated petroleum resin include "I-MARV P-100" available from Idemitsu Kosan Co., Ltd.

The tackifier is also preferably a hydrocarbon resin-based tackifier because it has excellent miscibility with, for example, the olefin-based polyol component. An especially preferred hydrocarbon resin-based tackifier is an alicyclic saturated hydrocarbon resin. Known examples of the alicyclic saturated hydrocarbon resin include "ARKON P-100" available from Arakawa Chemical Industries, Ltd.

The tackifier preferably has an acid value of 1 mg KOH/g or less. The tackifier with an acid value of 1 mg KOH/g or less can be sufficiently prevented from inhibiting the reaction between the polyol component and the polyisocyanate component. The tackifier preferably has a softening point of 80°C or higher and 120°C or lower, more preferably 80°C or higher and 100°C or lower. With a softening point of 80°C or higher and 120°C or lower, thermal deterioration of the polyol component can be sufficiently avoided when the tackifier is dissolved in the polyol component.

The thermosetting polyurethane composition has a tackifier content of 5 wt% or higher and 21 wt% or lower. With the thermosetting polyurethane composition having a tackifier content falling within the range of 5 to 21 wt%, the transparency of the resulting optically clear adhesive sheet can be particularly effectively increased. If the thermosetting polyurethane composition contains a tackifier content of lower than 5 wt%, the miscibility cannot be sufficiently increased, so that the transparency cannot be sufficiently increased. If the thermosetting polyurethane composition has a tackifier content higher than 21 wt%, the tackifier cannot dissolve in the thermosetting polyurethane composition, leading to a decrease in transparency. The lower limit of the tackifier content is preferably 10 wt%, and the upper limit thereof is preferably 17 wt%.

### [Plasticizer]

The thermosetting polyurethane composition may further contain a plasticizer. Addition of a plasticizer may decrease the rigidity, thereby improving the handleability of the optically clear adhesive sheet of the present invention and the capability of the optically clear adhesive sheet to conform to uneven surfaces. The addition of a plasticizer may possibly reduce the adhesive strength, but the optically clear adhesive sheet of the present invention, even with such reduced adhesive strength, can exhibit sufficient adhesive strength.

The plasticizer may be any compound used to impart flexibility to a thermoplastic resin, and preferably includes a carboxylic acid-based plasticizer in view of miscibility and weather resistance. Examples of the carboxylic acid-based plasticizer include phthalic esters (phthalic acid-based plasticizers) (e.g., diundecyl phthalate, dioctyl phthalate, diisononyl phthalate, diisodecyl phthalate, and dibutyl phthalate); 1,2-cyclohexanedicarboxylic acid diisononyl ester; adipic acid esters; trimellitic acid esters; maleic acid esters; benzoic acid esters; and poly-α-olefin. These may be used alone or in combination with each other. Known examples of the carboxylic acid-based plasticizer include "DINCH" available from BASF, "SANSO CIZER DUP" available from New Japan Chemical Co., Ltd., and "Durasyn® 148" available from Ineous Oligomers.

### [Catalyst]

The thermosetting polyurethane composition may further contain a catalyst. The catalyst may be any catalyst used in a urethane modification reaction. Examples thereof include organotin compounds (e.g., di-n-butyltin dilaurate, dimethyltin dilaurate, dibutyltin oxide, tin octanoate); organotitanium compounds; organozirconium compounds; tin carboxylates; bismuth carboxylates; and amine-based catalysts (e.g., triethylene diamine).

The catalyst is preferably a non-amine-based catalyst. In the case of using an amine-based catalyst, the optically clear adhesive sheet may be easily discolored. More preferred as the catalyst is dimethyltin dilaurate.

The amount of the catalyst added is, for example, 0.001 wt% or more and 0.1 wt% or less of the total amount of the polyol component and the polyisocyanate component.

The thermosetting polyurethane composition may further contain a monoisocyanate component. The monoisocyanate component is a compound containing one isocyanate group in a molecule. Specific examples thereof include octadecyl diisocyanate (ODI), 2-methacryloyloxyethyl isocyanate (MOI), 2-acryloyloxyethyl isocyanate (AOI), octyl isocyanate, heptyl isocyanate, ethyl 3-isocyanatopropionate, cyclopentyl isocyanate, cyclohexyl isocyanate, 1-isocyanato-2-methoxyethane, ethyl isocyanatoacetate, butyl isocyanatoacetate, and p-toluenesulfonyl isocyanate. These may be used alone or in combination with each other. The thermosetting polyurethane composition preferably contains no monoisocyanate component.

The thermosetting polyurethane composition may contain, as necessary, various additives such as colorants, stabilizers, antioxidants, antifungal agents, and flame retardants as long as the characteristics required for the optically clear adhesive sheet are not deteriorated.

The optically clear adhesive sheet of the present invention preferably has a haze of 5% or lower which is a value calculated with the thickness of the sheet set to 1000 µm. The haze is more preferably 2% or lower, still more preferably 1.5% or lower, particularly preferably 1% or lower, extremely preferably 0.5% or lower. The addition of the tackifier in the present invention increases the miscibility between the polyol component and the polyisocyanate component, thereby achieving high transparency. The optically clear adhesive sheet of the present invention preferably has a total light transmittance of 90% or higher. The haze and the total light transmittance can be measured using, for example, a turbidity meter "Haze Meter NDH2000" available from Nippon Denshoku Industries Co., Ltd. The haze is measured by a method in conformity with JIS K 7136. The total light transmittance is measured by a method in conformity with JIS K 7361-1.

The optically clear adhesive sheet of the present invention may have any thickness and has, for example, a thickness of 50 µm or greater and 3000 µm or smaller. If the optically clear adhesive sheet has a thickness of smaller than 50 µm, the sheet, when one of its surfaces is bonded to the surface of an optical member, may not be able to conform to a rough, uneven surface of the optical member. As a result, the other surface of the optically clear adhesive sheet may fail to be bonded to another optical member with a sufficient adhesive strength. The lower limit of the thickness of the optically clear adhesive sheet is preferably 100 µm.

The optically clear adhesive sheet of the present invention preferably has an adhesive strength of 2 N/25 mm or more, more preferably 5 N/25 mm or more, at normal temperature and normal humidity as measured by a 180° peel test. This is because the optically clear adhesive sheet of the present invention, when used to bond an optical member such as a touchscreen to another optical member, is required to have a certain degree of adhesive strength to achieve shock resistance. The adhesive strength is preferably 1.0 N/25 mm or more at high temperature and high humidity. The adhesive strength as measured by a 180° peel test is more preferably 10 N/25 mm or more and 15 N/25 mm or less at normal temperature and normal humidity. The adhesive strength is more preferably 4 N/25 mm or more and 15 N/25 mm or less, still more preferably 10 N/25 mm or more and 15 N/25 mm or less, at high temperature and high humidity. The optically clear adhesive sheet having an adhesive strength of 15 N/25 mm or less, when used to bond an optical member such as a touchscreen to another optical member, can be peeled off without adhesive residue, exhibiting excellent reworkability. If the adhesive strength of the optically clear adhesive sheet is very high, it may be difficult to remove air bubbles present between the optically clear adhesive sheet and the adherend. The details of the 180° peel test are described below.

The optically clear adhesive sheet of the present invention preferably has a micro rubber hardness (type A) of 0.1° or higher and 25° or lower. The optically clear adhesive sheet having a micro rubber hardness (type A) of lower than 0.1° may exhibit low handleability in use (during bonding of an optical member) and may be deformed. In contrast, the optically clear adhesive sheet having a micro rubber hardness (type A) of higher than 25° may exhibit low flexibility and, during bonding of an optical member, may fail to conform to the surface shape of the optical member and include air between itself and the optical member. This may eventually cause peeling of the sheet from the optical member. Also, the optically clear adhesive sheet having low flexibility may fail to conform to an uneven surface on which the bezel is present, during bonding of an optical member such as a touchscreen to another optical member. The micro rubber hardness (type A) of the optically clear adhesive sheet is more preferably 15° or lower. The micro rubber hardness (type A) can be measured with, for example, a micro durometer "MD-1 Type A" available from Kobunshi Keiki Co., Ltd. The micro durometer "MD-1 Type A" is a durometer designed and produced as an approximately 1/5-sized compact model of a spring type A durometer, and is capable of giving the same measurement result as a spring type A durometer even when the measuring object is thin.

The optically clear adhesive sheet of the present invention may have a release liner on each surface. A laminate including the optically clear adhesive sheet of the present invention, a first release liner covering one surface of the optically clear adhesive sheet, and a second release liner covering the other surface of the optically clear adhesive sheet (hereinafter, such a laminate is referred to as "the laminate of the present invention") is also one aspect of the present invention. The first and second release liners can protect the surfaces of the optically clear adhesive sheet of the present invention until immediately before the sheet is bonded to an adherend. The release liners therefore prevent deterioration of adhesion and sticking of foreign matters. Also, the surfaces can be prevented from being bonded to something other than the adherend, so that the handleability of the optically clear adhesive sheet of the present invention can be improved.

The first and second release liners can each be, for example, a polyethylene terephthalate (PET) film. The materials of the first release liner and the second release liner may be the same as or different from each other, and the thicknesses thereof may also be the same as or different from each other.

The bonding strength (peel strength) between the optically clear adhesive sheet of the present invention and the first release liner and the bonding strength between the optically clear adhesive sheet of the present invention and the second release liner are preferably different from each other. Such a difference in bonding strength makes it easy to peel one of the first and second release liners (release liner with lower bonding strength) alone from the laminate of the present invention and bond the exposed first surface of the optically clear adhesive sheet and the first adherend to each other, followed by peeling the other of the first and second release liners (release liner with higher bonding strength) and then bonding the exposed second surface of the optically clear adhesive sheet and the second adherend to each other. Easy-peel treatment (release treatment) may be performed on one or both of the surface of the first release liner coming into contact with the optically clear adhesive sheet of the present invention and the surface of the second release liner coming into contact with the optically clear adhesive sheet of the present invention. Examples of the easy-peel treatment include siliconizing.

Application of the optically clear adhesive sheet of the present invention may be, but is not particularly limited to, bonding of members such as a display panel, a touchscreen, and a cover panel to each other, for example. A display device with a touchscreen including the optically clear adhesive sheet of the present invention, a display panel, and a touchscreen (hereinafter, such a display device is also referred to as "the display device with a touchscreen according to the present invention") is also one aspect of the present invention.

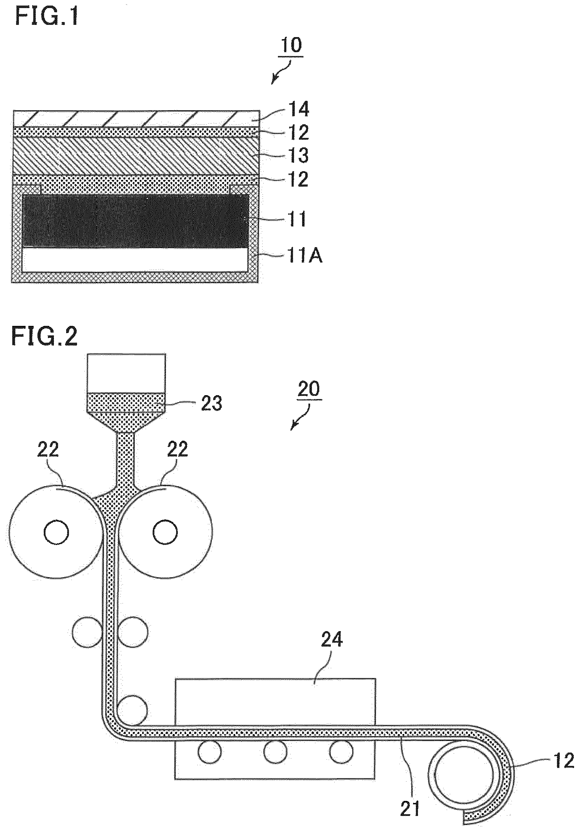

Fig. 1 shows a schematic cross-sectional view of an exemplary display device with a touchscreen which includes the optically clear adhesive sheets of the present invention. A display device 10 shown in Fig. 1 includes a display panel 11, an optically clear adhesive sheet 12, a touchscreen (glass substrate with an ITO transparent conductive film) 13, another optically clear adhesive sheet 12, and a transparent cover panel 14 stacked in the given order. The three optical members, namely the display panel 11, the touchscreen 13, and the transparent cover panel 14, are integrated into one member with the two optically clear adhesive sheets 12 of the present invention. The display panel 11 can be of any type, such as a liquid crystal panel or an organic electroluminescent panel (organic EL panel). The touchscreen 13 can be, for example, a resistive touchscreen or a capacitive touchscreen.

The display panel 11 is housed in a bezel (housing for the display panel 11) 11A that is provided with an opening in its surface close to the display surface. The outer edge of the opening of the bezel 11A has produced the uneven surface with peaks corresponding to the thickness of the bezel 11A. The optically clear adhesive sheet 12 bonded covers the display surface sides of the display panel 11 and the bezel 11A to conform to the uneven surface with peaks corresponding to the thickness of the bezel 11A. In order to conform to the uneven surface with peaks corresponding to the thickness of the bezel 11A, the optically clear adhesive sheet 12 is required to have flexibility and to be thicker than the bezel 11A. Thus, for example in the case where the peaks of the uneven surface formed by the bezel 11A have a height of 200 pm, the optically clear adhesive sheet 12 used to bond an optical member to the display panel 11 housed in the bezel 11A preferably has a thickness of 600 µm or larger. The optically clear adhesive sheet 12 of the present invention exhibits sufficient optical characteristics and flexibility even in the case of having a thickness of 600 µm or larger, and is therefore suited to bonding of an optical member to the display panel 11 housed in the bezel 11A.

The optically clear adhesive sheet of the present invention employed in such a display device is less likely to decrease in the adhesive strength under various conditions, and enables lasting, tight bonding of the optical members. As a result, no gap is formed between the optical members and the optically clear adhesive sheet, so that a decrease in visibility due to factors such as an increase in the interfacial reflection can be prevented. In particular, the optically clear adhesive sheet of the present invention is suitable for a display device incorporated into an automotive navigation system which needs to have high reliability, for example.

The optically clear adhesive sheet of the present invention may be produced by any method such as a method in which a thermosetting polyurethane composition is prepared, and then the composition is molded while being heat-cured by a known method. The method preferably includes the steps of preparing a thermosetting polyurethane composition by mixing a polyol component, a polyisocyanate component, and a tackifier with stirring, and curing the thermosetting polyurethane composition.

The following is a specific example of the production method. First, a masterbatch is prepared by adding a given amount of a tackifier to a polyol component and dissolving the tackifier by stirring while heating. The obtained masterbatch, an additional polyol component, and a polyisocyanate component as well as other components such as a catalyst as necessary are mixed with stirring using a mixer, for example, so that a liquid or gel thermosetting polyurethane composition is obtained. The thermosetting polyurethane composition is immediately fed into a molding machine such that the thermosetting polyurethane composition is crosslinked and cured while being transported in the state of being sandwiched between the first and second release liners. Thereby, the thermosetting polyurethane composition is semi-cured into a sheet integrated with the first and second release liners. The sheet is then crosslinked in a furnace for a given period of time, whereby an optically clear adhesive sheet containing a cured product of a thermosetting polyurethane composition is obtained. Through these steps, the laminate of the present invention is formed.

Fig. 2 shows a schematic view for describing an exemplary molding machine used in production of the optically clear adhesive sheet of the present invention. In a molding machine 20 shown in Fig. 2, a liquid or gel uncured thermosetting polyurethane composition 23 is poured between paired release liners (PET films) 21 continuously fed by paired rollers 22 which are disposed with a space in between. With the thermosetting polyurethane composition 23 retained between the release liners 21, the composition is transported into a heating machine 24 while being cured (crosslinked). In the heating machine 24, the thermosetting polyurethane composition 23 is heat-cured while being retained between the release liners (PET films) 21, whereby molding of the optically clear adhesive sheet 12 containing a cured product of a thermosetting polyurethane composition is completed.

The method for producing the optically clear adhesive sheet of the present invention may include, after preparation of an uncured thermosetting polyurethane composition, film formation using a general film-forming machine (e.g., any of various coating machines, bar coater, doctor blade) or by a general film-forming treatment. The optically clear adhesive sheet of the present invention may alternatively be produced by centrifugal molding.

### EXAMPLES

The present invention is described in more detail below based on examples. The examples, however, are not intended to limit the scope of the present invention.

### (Materials)

Materials used to prepare a thermosetting polyurethane composition in the following examples and comparative examples are listed below.

### (A) Polyol component

- Polyolefin polyol ("EPOL®" available from Idemitsu Kosan Co., Ltd., number average molecular weight: 2500)
- Polycarbonate polyol ("L34" available from Tosoh Corporation, number average molecular weight: 500)

### (B) Polyisocyanate component

- Hexamethylene diisocyanate (HDI)-based polyisocyanate A (Tosoh Corporation)
- HDI-based polyisocyanate B (Tosoh Corporation)
- HDI-based polyisocyanate C (Tosoh Corporation) (C) Tackifier
- Hydrogenated petroleum resin-based tackifier ("I-MARV P-100" available from Idemitsu Kosan Co., Ltd.)
- Alicyclic saturated hydrocarbon resin-based tackifier ("ARKON P-100" available from Arakawa Chemical Industries, Ltd.)
- Rosin diol-based tackifier ("KE-601" available from Arakawa Chemical Industries, Ltd.)
- Rosin-based tackifier ("KR-120" available from Arakawa Chemical Industries, Ltd.)
- Rosin-based tackifier ("KE-604" available from Arakawa Chemical Industries, Ltd.)

### (D) Plasticizer

- Mixture of 80% 1,2-cyclohexanedicarboxylic acid diisononyl ester and 20% adipic acid-based polyester ("OFH 55" available from BASF, product obtained by substituting about 20% of "DINCH" available from BASF by the adipic acid-based polyester)

### (E) Catalyst

### Dimethyltin dilaurate ("Fomrez catalyst UL-28" available from Momentive)

The HDI-based polyisocyanate A (abbreviated as "HDI-based A"), the HDI-based polyisocyanate B (abbreviated as "HDI-based B"), and the HDI-based polyisocyanate C (abbreviated as "HDI-based C") each have a structure shown in the following structural formula, which is obtained by reacting a HDI-based isocyanate with an ether polyol having n (n is three or more on average) ethylene oxide units (hydrophilic structures) per molecule thereof. The ethylene oxide unit contents (ratios by weight) of these HDI-based polyisocyanates have the following relationship: HDI-based polyisocyanate A > HDI-based polyisocyanate B > HDI-based polyisocyanate C.

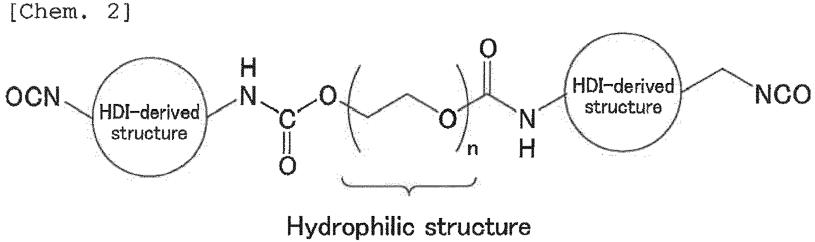

### (Example 1-1)

First, a solid hydrogenated petroleum resin-based tackifier (I-MARV P-100) was added to a polyolefin polyol (EPOL) whose temperature was controlled to 100°C to 150°C, and the mixture was stirred so that a tackifier masterbatch containing a tackifier dissolved in a polyolefin polyol was obtained. Here, the tackifier content in the tackifier masterbatch was adjusted to 30 wt%. A polyolefin polyol (EPOL, 100 parts by weight), the HDI-based polyisocyanate A (27 parts by weight), the tackifier masterbatch (26 parts by weight), a plasticizer (OFH 55, 6 parts by weight), and the catalyst (dimethyltin dilaurate, 0.01 parts by weight) were mixed with stirring using an oscillating model agitator "Ajiter". Thereby, a thermosetting polyurethane composition was prepared.

The obtained thermosetting polyurethane composition was fed into the molding machine 20 shown in Fig. 2. The thermosetting polyurethane composition was crosslinked and cured at a furnace temperature of 50°C to 90°C for a furnace time of a few minutes while being transported in the state of being sandwiched between the paired release liners (PET films with release-treated surfaces) 21, and thereby a sheet with the release liners 21 was obtained. The sheet was crosslinked in the heating machine 24 for 10 to 15 hours, so that the optically clear adhesive sheet 12 having the release liner 21 on each surface and containing a cured product of a thermosetting polyurethane composition (hereinafter, such a sheet is also referred to as an "optically clear adhesive sheet with release liners") was produced.

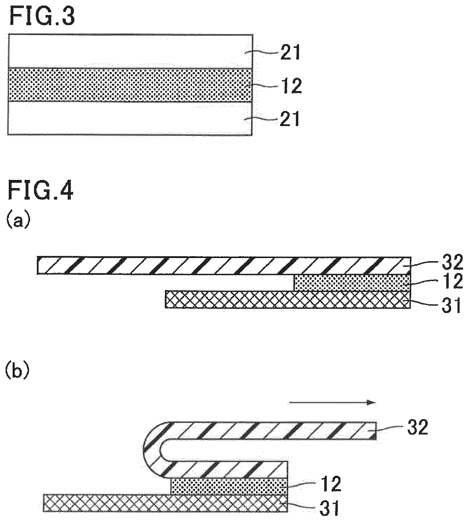

Fig. 3 shows a schematic cross-sectional view of an optically clear adhesive sheet with release liners of Example 1. As shown in Fig. 3, the obtained optically clear adhesive sheet with release liners was a laminate of the release liner 21, the optically clear adhesive sheet 12 containing a cured product of a thermosetting polyurethane composition, and the release liner 21 stacked in the given order. The optically clear adhesive sheet 12 had a thickness of 1000 µm.

### (Examples 1-2 to 1-7 and Comparative Example 1)

Optically clear adhesive sheets with release liners of Examples 1-2 to 1-7 and Comparative Example 1 were each produced by a procedure similar to that in Example 1-1, except that the composition was changed as shown in the following Table 1.

### (Evaluations)

The following evaluations were conducted on the optically clear adhesive sheets with release liners in the examples and comparative examples. The results of the evaluations are shown in the following Table 1.

### (1) Haze measurement

The optically clear adhesive sheet from which release liners were peeled off was sandwiched between 1.3-mm-thick soda-lime glass plates available from Matsunami Glass Ind., Ltd., so that a test sample was produced which included the glass plate, the optically clear adhesive sheet, and the glass plate stacked in the given order. The haze of the test sample was measured by a method in conformity with JIS K 7136 using a turbidity meter "Haze Meter NDH2000" available from Nippon Denshoku Industries Co., Ltd. In each of the examples and comparative examples, three test samples were prepared and subjected to the measurement in a normal-temperature, normal-humidity environment. The average of the obtained three measurement values was used as the measurement result in each of the examples and comparative examples.

### (2) Total light transmittance measurement

The total light transmittance was measured by a method in conformity with JIS K 7361-1 using a turbidity meter "Haze Meter NDH2000" available from Nippon Denshoku Industries Co., Ltd. In each of the examples and comparative examples, three test samples were prepared and subjected to the measurement. The average of the obtained three measurement values was used as the measurement result in each of the examples and comparative examples.

### (3) Micro rubber hardness (type A) measurement

The optically clear adhesive sheets from which both release liners were peeled off were stacked such that a laminate having a thickness of 4 mm was obtained. The obtained laminate was cut into a test sample having a size of 75 mm (length) × 25 mm (width). The hardness of the test sample at normal temperature was measured with a micro durometer "MD-1 Type A" available from Kobunshi Keiki Co., Ltd. In this measurement, a cylindrical indenter having a diameter of 0.16 mm and a height of 0.5 mm was used. In each of the examples and comparative examples, one test sample was prepared and subjected to the measurement four times. The median of the obtained four measurement values was used as the measurement result in each of the examples and comparative examples.

### (4) Adhesive strength measurement

The adhesive strength (N/25 mm) was measured by a 180° peel test conducted by the following method. Fig. 4 shows schematic views for describing the method for evaluating the adhesive strength of the optically clear adhesive sheets of examples and comparative examples. First, each optically clear adhesive sheet with release liners was cut into a test sample having a size of 75 mm (length) × 25 mm (width). One of the release liners of the test sample was peeled off, and the exposed optically clear adhesive sheet 12 of the test sample was bonded to a microscope slide 31 made of glass (i.e., glass slide) having a size of 75 mm (length) × 25 mm (width). The members were retained in this state under a pressure of 0.4 MPa for 30 minutes, so that the optically clear adhesive sheet 12 and the microscope slide 31 were bonded to each other. The other release liner on the side opposite to the microscope slide 31 was then peeled off, and a PET sheet ("Melinex® S" available from Teijin DuPont Films) 32 having a thickness of 125 µm was bonded to the surface of the optically clear adhesive sheet 12 on the side opposite to the microscope slide 31 as shown in Fig. 4(a).

The test sample was then left to stand in a normal-temperature, normal-humidity environment (temperature: 23°C, humidity: 50%) for 12 hours. The adhesive strength of the optically clear adhesive sheet 12 to the microscope slide 31 was measured by pulling the PET sheet 32 in the 180° direction as shown in Fig. 4(b) such that the optically clear adhesive sheet 12 was separated from the microscope slide 31 at the interface therebetween. In each of the examples and comparative examples, two test samples were prepared for the measurement. The average of the obtained two measurement values was used as the measurement result in each of the examples and comparative examples.

### (5) Appearance check

The optically clear adhesive sheet from which both release liners were peeled off was sandwiched between 1.3-mm-thick soda-lime glass plates available from Matsunami Glass Ind., Ltd., so that a test sample was produced which included the glass plate, the optically clear adhesive sheet, and the glass plate stacked in the given order. The test sample was left to stand in a normal temperature, normal humidity environment (temperature: 23°C, humidity: 50%) for 300 hours. The interface between the bonded surfaces of the test sample was visually observed to determine whether or not air bubbles were present. Also, the test sample was visually observed to determine whether or not whitening occurred in the optically clear adhesive sheet.

**[Table 1]**

| | | Comparative Example 1 | Example 1-1 | Example 1-2 | Example 1-3 | Example 1-4 | Example 1-5 | Example 1-6 | Example 1-7 |
|---|---|---|---|---|---|---|---|---|---|
| (A) Polyol component | EPOL | 100 | 100 | 100 | 100 | 100 | 100 | 100 | 100 |
| (B) Polyisocyanate component | HDI-based A | 23 | 27 | 31 | 33 | 38 | 47 | 57 | 84 |
| (C) Tackifier masterbatch | I-MARVP-100 | 0 | 26 | 48 | 67 | 92 | 148 | 207 | 373 |
| | | 0 wt% | 5 wt% | 8 wt% | 10 wt% | 12 wt% | 15 wt% | 17 wt% | 20 wt% |
| (D) Plasticizer | OFH55 | 5 | 6 | 7 | 8 | 10 | 12 | 15 | 24 |
| α Ratio | | 1.8 | 1.8 | 1.8 | 1.8 | 1.8 | 1.8 | 1.8 | 1.8 |
| Haze (%) | | 13.2 | 4.2 | 1.7 | 0.69 | 0.35 | 0.42 | 1.25 | 2.53 |
| Total light transmittance (%) | | 91.7 | 91.3 | 91.33 | 91.4 | 91.6 | 91.4 | 92.3 | 90.9 |
| Micro rubber hardness (type A) (°) | | 3.1 | 2.2 | 3.8 | 3.7 | 4.1 | 3.4 | 4-5 | 4.4 |
| Adhesive strength (N/25 mm) | | 7.1 | 8.2 | 7.7 | 7.9 | 9.4 | 7.1 | 11.8 | 11.4 |
| Appearance at normal temperature, normal humidity | | Turbid | Slightly turbid | Normal | Normal | Normal | Normal | Normal | Slightly turbid |

### Examples 2-1 to 2-5 and Comparative Example 2)

Optically clear adhesive sheets with release liners in Examples 2-1 to 2-5 and Comarative Example 2 were produced and subjected to the evaluations as in Example 1-1, except that the compositions were varied as shown in the following Table 2. The evaluation results are shown in the following Table 2.

**[Table 2]**

| | | Comparative Example 2 | Example 2-1 | Example 2-2 | Example 2-3 | Example 2-4 | Example 2-5 |
|---|---|---|---|---|---|---|---|
| (A) Polyol component | EPOL | 100 | 100 | 100 | 100 | 100 | 100 |
| (B) Polyisocyanate component | HDI-based B | 23 | 27 | 31 | 33 | 38 | 47 |
| (C) Tackifier masterbatch | I-MARVP-100 | 0 | 26 | 48 | 67 | 92 | 148 |
| | | 0 wt% | 5 wt% | 8 wt% | 10 wt% | 12 wt% | 15 wt% |
| (D) Plasticizer | OFH55 | 5 | 6 | 7 | 8 | 10 | 12 |
| α Ratio | | 1.8 | 1.8 | 1.8 | 1.8 | 1.8 | 1.8 |
| Haze (%) | | 13.79 | 3.03 | 0.83 | 0.38 | 0.26 | 0.51 |
| Total light transmittance (%) | | 91.8 | 91.6 | 91.73 | 91.48 | 91.54 | 91.73 |
| Micro rubber hardness (type A) (°) | | 5 | 3.1 | 3.5 | 3.1 | 2.9 | 2.3 |
| Adhesive strength (N/25 mm) | | 5.3 | 7.9 | 7.8 | 9.3 | 8.5 | 8.2 |
| Appearance at normal temperature, normal humidity | | Turbid | Slightly turbid | Normal | Normal | Normal | Normal |

### (Examples 3-1 to 3-3)

Optically clear adhesive sheets with release liners in Examples 3-1 to 3-3 were produced and subjected to the evaluations as in Example 1-1, except that the compositions were varied as shown in the following Table 3. The evaluation results are shown in the following Table 3.

**[Table 3]**

| | | Comparative Example 2 | Example 3-1 | Example 3-2 | Example 3-3 |
|---|---|---|---|---|---|
| (A) Polyol component | EPOL | 100 | 100 | 100 | 100 |
| (B) Polyisocyanate component | HDI-based B | 23 | 27 | 33 | 47 |
| (C) Tackifier masterbatch | ARKON P-100 | 0 | 26 | 67 | 148 |
| | | 0 wt% | 5 wt% | 10 wt% | 15wt% |
| (D) Plasticizer | OFH55 | 5 | 6 | 8 | 12 |
| α Ratio | | 1.8 | 1.8 | 1.8 | 1.8 |
| Haze (%) | | 13.79 | 1.92 | 0.71 | 0.19 |
| Total light transmittance (%) | | 91.8 | 91.3 | 91.2 | 92.4 |
| Micro rubber hardness (type A) (°) | | 5 | 3.8 | 4.1 | 2.7 |
| Adhesive strength (N/25 mm) | | 5.3 | 5.9 | 6.7 | 6.4 |
| Appearance at normal temperature, normal humidity | | Turbid | Normal | Normal | Normal |

### (Examples 4-1 to 4-3 and Comparative Example 3)

Optically clear adhesive sheets with release liners in Examples 4-1 to 4-3 and Comparative Example 3 were produced and subjected to the evaluations as in Example 1-1, except that the compositions were varied as shown in the following Table 4. The evaluation results are shown in the following Table 4.

**[Table 4]**

| | | Example 4-1 | Example 4-2 | Example 4-3 | Comparative Example 3 |
|---|---|---|---|---|---|
| (A) Polyol component | EPOL | 100 | 100 | 100 | 100 |
| (B) Polyisocyanate component | HDI-based C | 15 | 24 | 37 | 87 |
| (C) Tackifier masterbatch | I-MARV P-100 | 58 | 163 | 326 | 958 |
| | | 10 wt% | 17 wt% | 21 wt% | 25 wt% |
| (D) Plasticizer | - | 0 | 0 | 0 | 0 |
| α Ratio | | 1.9 | 1.9 | 1.9 | 1.9 |
| Haze (%) | | 0.43 | 0.31 | 0.19 | 4.79 |
| Total light transmittance (%) | | 91.21 | 90.96 | 90.66 | 84.94 |
| Micro rubber hardness (type A) (°) | | 2.5 | 2 | 3 | 2.6 |
| Adhesive strength (N/25 mm) | | 4.4 | 10.1 | 8.4 | 15.8 |
| Appearance at normal temperature, normal humidity | | Normal | Normal | Normal | Slightly turbid |

### (Example 5)

An optically clear adhesive sheet with release liners in Example 5 was produced and subjected to the evaluations as in Example 1-1, except that the composition was varied as shown in the following Table 5 and the thickness of the sheet was set to 300 µm. The evaluation results are shown in the following Table 5.

**[Table 5]**

| | | Example 5 |
|---|---|---|
| (A) Polyol component | L34 | 100 |
| (B) Polyisocyanate com ponent | HDI-based A | 2057 |
| (C) Tackifier masterbatch | KE-601 | 1650 |
| | | 13 wt% |
| α Ratio | | 1.3 |
| Haze (%) | | 0.38 |
| Total light transmittance (%) | | 91.57 |
| Micro rubber hardness (type A) (°) | | 20.4 |
| Adhesive strength (N/25 mm) | | 17.4 |
| Appearance at normal temperature, normal humidity | | Normal |

### (Examples 6-1 to 6-3)

Optically clear adhesive sheets with release liners in Examples 6-1 to 6-3 were produced and subjected to the evaluations as in Example 1-1, except that the compositions were varied as shown in the following Table 6 and the thickness of the sheets was set to 300 µm. The evaluation results are shown in the following Table 6.

**[Table 6]**

| | | Example 6-1 | Example 6-2 | Example 6-3 |
|---|---|---|---|---|
| (A) Polyol component | L34 | 100 | 100 | 100 |
| (B) Polyisocyanate component | HDI-based A | 173 | 302.5 | 359 |
| (C) Tackifier masterbatch | KE-604 | 54.7 | 201.3 | 266 |
| | | 5 Wt% | 10 wt% | 11 wt% |
| α Ratio | | 1.4 | 1.4 | 1.4 |
| Haze (%) | | 0.3 | 0.35 | 0.35 |
| Total light transmittance (%) | | 92.3 | 92.8 | 92.8 |
| Micro rubber hardness (type A) (°) | | 10.5 | 13 | 14 |
| Adhesive strength (N/25 mm) | | 20 | 28 | 29 |
| Appearance at normal temperature, normal humidity | | Normal | Normal | Normal |

### (Examples 7-1 to 7-3)

Optically clear adhesive sheets with release liners in Examples 7-1 to 7-3 were produced and subjected to the evaluations as in Example 1-1, except that the compositions were varied as shown in the following Table 7. The evaluation results are shown in the following Table 7.

**[Table 7]**

| | | Example 7-1 | Example 7-2 | Example 7-3 |
|---|---|---|---|---|
| (A) Polyol component | L34 | 100 | 100 | 100 |
| (B) Polyisocyanate component | HDI-based A | 173 | 302.5 | 359 |
| (C) Tackifier masterbatch | KR-120 | 54.7 | 201.3 | 266 |
| | | 5 wt% | 10 wt% | 11 wt% |
| α Ratio | | 1.4 | 1.4 | 1.4 |
| Haze (%) | | 0.39 | 0.18 | 0.2 |
| Total light transmittance (%) | | 91.4 | 91.3 | 91.3 |
| Micro rubber hardness (type A) (°) | | 9.9 | 12 | 12.2 |
| Adhesive strength (N/25 mm) | | 16.7 | 21 | 22 |
| Appearance at normal temperature, normal humidity | | Normal | Normal | Normal |

### REFERENCE SIGNS LIST

- 10: Display device
- 11: Display panel
- 11A: Bezel
- 12: Optically clear adhesive sheet
- 13: Touchscreen
- 14: Transparent cover panel
- 20: Molding machine
- 21: Release liner
- 22: Roller
- 23: Thermosetting polyurethane composition
- 24: Heating machine
- 31: Microscope slide
- 32: PET sheet

## Claims

1. An optically clear adhesive sheet comprising a cured product of a thermosetting polyurethane composition,
the thermosetting polyurethane composition containing a polyol component, a polyisocyanate component, and a tackifier,
the thermosetting polyurethane composition having a tackifier content of 5 to 21 wt%.

2. The optically clear adhesive sheet according to claim 1,
wherein the optically clear adhesive sheet has a haze of 5% or lower which is a value calculated with the thickness of the sheet set to 1000 µm.

3. The optically clear adhesive sheet according to claim 1 or 2,
wherein the polyol component includes a hydrophobic polyol.

4. The optically clear adhesive sheet according to any one of claims 1 to 3,
wherein the polyisocyanate component includes a hydrophilic polyisocyanate.

5. The optically clear adhesive sheet according to any one of claims 1 to 4,
wherein the tackifier includes a hydrogenated petroleum resin.

6. The optically clear adhesive sheet according to any one of claims 1 to 4,
wherein the tackifier includes an alicyclic saturated hydrocarbon resin.

7. A method for producing the optically clear adhesive sheet according to any one of claims 1 to 6, the method comprising the steps of:
preparing the thermosetting polyurethane composition by mixing the polyol component, the polyisocyanate component, and the tackifier with stirring; and
curing the thermosetting polyurethane composition.

8. A laminate comprising:
the optically clear adhesive sheet according to any one of claims 1 to 6;
a first release liner covering one surface of the optically clear adhesive sheet; and
a second release liner covering the other surface of the optically clear adhesive sheet.

9. A display device with a touchscreen, comprising:
the optically clear adhesive sheet according to any one of claims 1 to 6;
a display panel; and
a touchscreen.
